# EUROPEAN PATENT APPLICATION

(11) **EP 4 015 456 A1**
(43) Date of publication of application: **22.06.2022**
(21) Application number: 20215125.4
(22) Date of filing: 17.12.2020
(51) Int. Cl.: C01F 7/22, C01F 7/30, C01F 7/56, C01F 7/62, C01F 11/46, C22B 21/00

(54) **METHODS FOR PREPARING ALUMINA FROM A CRUDE ALUMINUM SOLUTION USING AL2(SO4)3**

(71) Applicant: SiQAl UG (Haftungsbeschränkt), 12103 Berlin (DE)
(72) Inventor: BARTEL, Til, 12103 Berlin (DE)
(74) Representative: Schulz Junghans Patentanwälte PartGmbB

(57) **Abstract**

The present invention relates to processes for preparing high-purity alumina or aluminum chloride hexahydrate. Depending on the amount of impurities, a crude aluminum solution is either first treated with a separation solution that comprises aluminum sulphate to precipitate alkaline earth metal sulphates followed by separating a purified aluminum solution and conversion of aluminum ions to aluminum chloride hexahydrate or alumina, or aluminum ions of an aluminum solution are directly converted to aluminum chloride hexahydrate or alumina without using a separation solution.

## Description

The present invention relates to processes of preparing aluminum chloride hexahydrate or alumina from a crude aluminum solution or from aluminous material.

### Background of the Invention

High-Purity aluminum oxide (HPA) is a high-value, technology enabling material with a market that has grown from almost nil to €1 billion within the last two decades, mainly driven by the LED and Li-Ion Battery sectors. Incumbent supply routes feed on either highly processed input materials or on natural sources. Both routes are associated with mining activities, a significant environmental footprint and high cost.

Alternative approaches can be found by using aluminum containing wastes and other materials readily available in any industrialized country as input materials. This offers two distinct features: it takes advantage of the tight specifications of an industrial process which results in HPA of good quality and contributes to circular economy by upcycling low value materials.

Based on the above-mentioned state of the art, the objective of the present invention is to provide means and methods to prepare alumina from a crude aluminum solution or from aluminous material. This objective is attained by the subject-matter of the independent claims of the present specification, with further advantageous embodiments described in the dependent claims, examples, figures and general description of this specification.

### Summary of the Invention

The crystallization of aluminum chloride hexahydrate (AlCl₃*6H₂O or ACH) from aluminum chloride solutions yields in ACH crystals of higher purity than the starting solution. Hence the effect can be used to refine aluminum chloride hexahydrate from crude aluminum chloride solutions.

These crude aluminum chloride solutions can be obtained by several different input materials and methods like digestion of aluminum-dross or aluminum scrap in hydrochloric acid, digestion or leaching of calcium-aluminate or calcium-aluminate-slag in hydrochloric acid, etching off aluminum residuals from Silicon-crystals obtained by crystallization from Al-Si-melts by hydrochloric acid, dissolution of salts containing Al- chlorides, or leaching of material mixes containing Al(OH)₃ with hydrochloric acid.

Often such crude aluminum chloride solutions have significant concentrations of calcium, sodium, magnesium, iron, or other impurities. If the mentioned impurities are present in low enough concentrations the purification via the crystallization of ACH works with reasonable efforts.

For higher impurity concentrations methods must be found to pre-purify the crude aluminum chloride solutions to make them usable. Hereby the precipitation of sulphates like CaSO₄, BaSO₄ or SrSO₄ can be used to purify the crude aluminum chloride solution from Ca, Ba and Sr or any other impurities which can be exchanged into the mentioned elements by means of ion exchanger techniques.

Hereby the addition of SO₄⁻ ions should be achieved without adding other impurities. The easiest way of realization would be the addition of pure sulfuric acid according the reaction:

XCl₂ + H₂SO₄ → 2 HCl + XSO₄ (X = Ca, Ba, Sr)

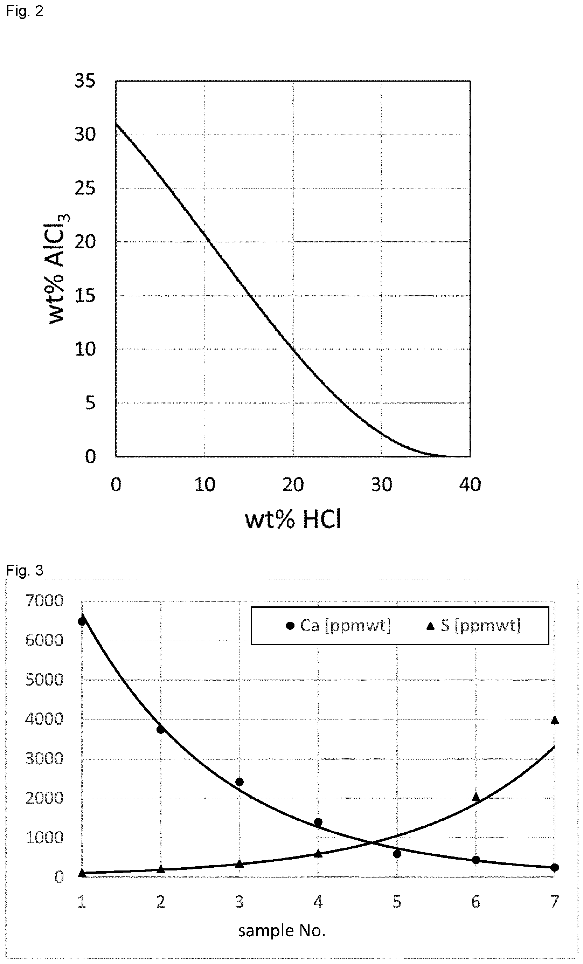

However, this would also form a lot of hydrochloric acid which would limit the solubility of aluminum chloride in the purified aluminum solution. The solubility curve in Figure 2 shows the dependence of this solubility and indicates that increased HCI-concentrations would lead to a co-precipitation of the alkaline earth sulphate with aluminum chloride-hexahydrate. This can avoid keeping aluminum in solution during the pre-purification of the crude aluminum chloride solution and may lead to losses. Furthermore, the solubility of sulphates like CaSO₄ can be increased in presence of HCI which would not allow to decrease the Ca-concentrations below critical levels.

Therefore, the present invention avoids the formation of free HCI by adding the SO₄⁻ ions in form of a pure Al₂(SO₄)₃-solution causing a precipitation according:

3 XCl₂ + Al₂(SO₄)₃ → 2 AlCl₃ + 3 XSO₄ (X= Ca, Ba, Sr).

This has the advantage of reaching exceptionally low residual Ca-concentrations and exchanges the precipitated calcium by dissolved aluminum. The resulting purified solution is rich in aluminum and stays low in residual HCl.

A first aspect of the invention relates to a process for preparing AlCl₃*6H₂O or alumina, said process comprising:
- providing of a crude aluminum solution comprising ions of aluminum and ions of at least one alkaline earth metal selected from calcium, strontium, or barium,
- providing of a separation solution comprising aluminum sulphate;
- mixing said crude aluminum solution and said separation solution in a precipitation step,
- separating of alkaline earth metal sulphates in a separating step yielding a purified aluminum solution,
- converting the aluminum ions of said purified aluminum solution into AlCl₃*6H₂O or alumina in a converting step.

A second aspect of the invention relates to a process for preparing high-purity alumina or AlCl₃*6H₂O, wherein an aluminum solution is treated by the following steps:
a) injection of HCl-gas to crystallize aluminum as AlCl₃*6H₂O,
b) separating the formed AlCl₃*6H₂O from the remaining liquid,
c) dissolving the formed AlCl₃*6H₂O in water to obtain a saturated solution and optionally repeating a) and b) until the desired purity of the formed AlCl₃*6H₂O is reached,
d) optionally, converting the formed AlCl₃*6H₂O into alumina by thermal decomposition
wherein the aluminum solution comprises one or more impurities having a content of less than 1000 ppm wt each.

A third aspect of the invention relates to a process for separating alkaline earth metal from aluminous material, said process comprising:
- providing of a crude aluminum solution comprising ions of aluminum and ions of at least one alkaline earth metal selected from calcium, strontium or barium,
- providing of a separation solution comprising aluminum sulphate;
- mixing said crude aluminum solution and said separation solution in a precipitation step,
- separating of alkaline earth metal sulphates in a separating step yielding a purified aluminum solution.

### Terms and definitions

For purposes of interpreting this specification, the following definitions will apply and whenever appropriate, terms used in the singular will also include the plural and vice versa. In the event that any definition set forth below conflicts with any document incorporated herein by reference, the definition set forth shall control.

The terms "comprising," "having," "containing," and "including," and other similar forms, and grammatical equivalents thereof, as used herein, are intended to be equivalent in meaning and to be open ended in that an item or items following any one of these words is not meant to be an exhaustive listing of such item or items, or meant to be limited to only the listed item or items. For example, an article "comprising" components A, B, and C can consist of (i.e., contain only) components A, B, and C, or can contain not only components A, B, and C but also one or more other components. As such, it is intended and understood that "comprises" and similar forms thereof, and grammatical equivalents thereof, include disclosure of embodiments of "consisting essentially of' or "consisting of."

Where a range of values is provided, it is understood that each intervening value, to the tenth of the unit of the lower limit, unless the context clearly dictate otherwise, between the upper and lower limit of that range and any other stated or intervening value in that stated range, is encompassed within the disclosure, subject to any specifically excluded limit in the stated range. Where the stated range includes one or both of the limits, ranges excluding either or both of those included limits are also included in the disclosure.

Reference to "about" a value or parameter herein includes (and describes) variations that are directed to that value or parameter per se. For example, description referring to "about X" includes description of "X."

As used herein, including in the appended claims, the singular forms "a," "or," and "the" include plural referents unless the context clearly dictates otherwise.

Unless defined otherwise, all technical and scientific terms used herein have the same meaning as commonly understood by one of ordinary skill in the art.

The term *alumina* in the context of the present specification relates to aluminum oxide, Al₂O₃ (CAS No. 1344-28-1).

The term *aluminum chloride hexahydrate* in the context of the present specification relates to AlCl₃*6H₂O (CAS No. 7784-13-6).

The term *ppm wt* in the context of the present specification relates to a mass fraction. 1 ppm wt corresponds to 0.0001 %wt or 1 mg/kg. In the context of the present invention, the mass fraction is in relation to the total mass of the solution. For example, a Ca content of 600 ppm wt in a crude aluminum solution refers to 600 mg Ca per kilo crude aluminum solution.

The term *impurity* or *other impurity* in the context of the present specification relates to ions of metals (except of aluminum ions) or non-metals that are present in aluminum solutions. Particularly, the term relates to other ions than ions than aluminum ions and ions of the alkaline earth metals calcium, strontium and barium. Non-limiting examples for impurities are ions of S, Na, Mg, Si, P, B, K, Li, Cr, Ti, V, Co, Mn, Fe, Ni, Cu, Zn, Sc, Be, Ga, Ge, As, Se, Br, Y, Zr, Mo, W, Pt, Au, Pb.

The term *crude aluminum solution* in the context of the present specification relates to an aluminum solution that comprises ions of at least one alkaline earth metal selected from calcium, strontium and barium, particularly calcium. Furthermore, the crude aluminum solution may optionally contain one or more impurities. Particularly, the mass fraction of at least one of said alkaline earth metals, particularly of each of said alkaline earth metals, is more than 600 ppm wt and the mass fraction of impurities is below 1000 ppm wt for each impurity.

The term *pre-crude aluminum solution* in the context of the present specification relates to an aluminum solution having a higher content of impurities compared to the crude aluminum solution. Ions of calcium and/or barium and/or strontium may optionally be present in the pre-crude aluminum solution. Particularly, the mass fraction of impurities in the pre-crude aluminum solution is more than 1000 ppm wt, particularly more than 600 ppm wt. If ions of Ca, Br or Sr are present, the mass fraction of at least one of said ions, particularly of each of said ions, is more than 600 ppm wt each. The pre-crude aluminum solution may be treated by ion exchange methods to exchange impurities with ions of Ca, Sr, Ba and/or Al to obtain a crude aluminum solution.

The term *calcium-aluminate* in the context of the present specification relates to a group of compounds consisting of calcium oxide and aluminum oxide in different ratios of CaO : Al₂O₃. Often Calcium aluminates consist of different leachable mineral phases like mayenite (Ca₁₂Al₁₄O₃₃) and others.

The term *calcium-aluminate-slag* in the context of the present specification relates to a slag that comprises calcium aluminate, particularly 70 to 100 wt% calcium-aluminate. A *slag* is the glassy or crystalline by-product left over after a metal has been separated from its raw ore or a metal was refined in a pyrometallurgical process using slag forming additives. Typically, a slag is a solidified oxidic melt comprising not only calcium but may also comprise aluminum, silicon and one or more impurities.

The term *aluminum-dross* in the context of the present specification relates to a byproduct of aluminum melting processes. Every time when an aluminum melt is in contact with air a layer of oxide is forming on top and needs to be removed before the melt is casted. Typically, Aluminum dross contains 40 to 80%wt of metallic aluminum or aluminum alloys and a remaining part of aluminum oxide and other oxides. Aluminum dross may comprise calcium and/or magnesium and/or silicon and/or strontium, and/or one or more impurities.

The term *aluminum scrap* in the context of the present specification relates to waste that contains aluminum. Aluminum scrap may comprise calcium and/or magnesium and/or silicon, and/or one or more impurities.

The term *Al-Si-melt* in the context of the present specification relates to a molten aluminum-silicon alloy comprising aluminum and silicon. An Al-Si-melt may comprise calcium and/or barium and/or strontium, and/or one or more impurities.

The term *Si-crystal* in the context of the present specification relates to crystals that are obtained by crystallization from an Al-Si-melt. The Si-crystals mainly consist of pure silicon and are coated with residuals of the Al-Si melt they have been growing in. In metallurgical silicon purification processes this melt coating can be removed by etching in Hydrochloric acid which does not attack the silicon. After etching the silicon is further processed. Si-crystals may further comprise traces of aluminum, calcium and/or magnesium and/or strontium, and/or one or more impurities.

The term *material mix containing Al(OH)₃* in the context of the present specification relates to industrial wastes and byproducts that comprise Al(OH)₃. Such materials can be obtained as secondary alumina during conventional dross recycling or other chemical processes when Al(OH)₃ is precipitated. The material mix may comprise calcium and/or sodium and/or strontium, and/or one or more impurities.

The term *salts containing Al-chlorides* in the context of the present specification relates to different salts such as crude aluminum chloride hexahydrate or poly aluminum chlorides (PAC). PAC is typically produced and used in large quantities as a flocculant for wastewater treatment. It may contain other chlorides and sulphates which do not allow to process HPA from PAC directly. The salts may comprise calcium and/or barium and/or strontium, and/or one or more impurities.

### Detailed Description of the Invention

A first aspect of the invention relates to a process for preparing AlCl₃*6H₂O or alumina, said process comprising:
- providing of a crude aluminum solution comprising ions of aluminum and ions of at least one alkaline earth metal selected from calcium, strontium, or barium, particularly calcium,
- providing of a separation solution comprising aluminum sulphate;
- mixing said crude aluminum solution and said separation solution in a precipitation step,
- separating of alkaline earth metal sulphates in a separating step yielding a purified aluminum solution,
- converting the aluminum ions of said purified aluminum solution into AlCl₃*6H₂O or alumina, particularly into alumina, in a converting step.

As described above, crude aluminum solutions usually contain further metal ions. In the production of high-purity AlCl₃*6H₂O or aluminum oxide (alumina), the precipitation of alkaline earth metal sulphates is particularly required if the mass fraction of an alkaline earth metal such as calcium, strontium or barium exceeds a certain threshold. For example, if one of said alkaline earth metals exceeds 600 ppm wt in relation to the total mass of the crude aluminum solution, the method according to the invention may be performed. The mass fraction of an alkaline earth metal is determined by standard methods, e.g. by means of ICP-OES (inductively coupled plasma atomic emission spectroscopy).

In certain embodiments, the content of said alkaline earth metal and/or said impurity is measured before mixing the crude aluminum solution and the separation solution.

In certain embodiments, the content of said alkaline earth metal and/or said impurity is determined before mixing the crude aluminum solution and the separation solution by means of ICP-OES (inductively coupled plasma atomic emission spectroscopy) or ICP-MS (inductively coupled plasma mass spectroscopy), particularly by means of ICP-OES.

In certain embodiments, the content of at least one of alkaline earth metal selected from calcium, strontium or barium in that crude aluminum solution is more than 600 ppm wt.

In certain embodiments, the content of calcium in that crude aluminum solution is more than 600 ppm wt.

Also, other ions than calcium, strontium or barium may be present in a crude aluminum solution as impurities, wherein a mass fraction of up to 1000 ppm wt for each impurity may be tolerated. Non-limiting examples for such impurities are ions of Fe, K, Na, Mg, Cu, S, Si and Zn.

In certain embodiments, the crude aluminum solution comprises one or more impurities with a content of less than 1000 ppm wt each.

In certain embodiments, the crude aluminum solution comprises a magnesium ion content of less than 1000 ppm wt.

In certain embodiments, the content of at least one of alkaline earth metal selected from calcium, strontium or barium in that crude aluminum solution is more than 600 ppm wt and the crude aluminum solution comprises one or more impurities with a content of less than 1000 ppm wt each.

The crude aluminum solution may be obtained in industrial processes of upcycling aluminum containing wastes or other materials. A common approach to achieve a crude aluminum solution is the treatment of an aluminous material with HCI. Also, the dissolution of salts that comprise aluminum chlorides yields a crude aluminum solution. Furthermore, an impure aluminum solution (pre-crude aluminum solution) that comprises an impurity may be treated by ion exchange methods to obtain a crude aluminum solution that is suitable for performing the method described above, i.e. suitable for performing the precipitation, the separating and the converting step.

In certain embodiments, the crude aluminum solution is provided by
- treatment of an aluminous material with HCI,
- dissolution of salts containing one or more Al chlorides, or
- treating a pre-crude aluminum solution comprising an impurity by exchanging said impurity with an ion of calcium or strontium or barium and/or aluminum.

In certain embodiments, the crude aluminum solution is provided by treatment of an aluminous material with HCI or dissolution of salts containing one or more Al-chlorides.

In certain embodiments, the crude aluminum solution is provided by treatment of an aluminous material with HCI.

The aluminous material and the salts containing Al chlorides comprise ions of at least one alkaline earth metal selected from calcium, strontium and barium, and optionally one or more impurities.

The pre-crude aluminum solution comprises one or more impurities and optionally ions of at least one alkaline earth metal selected from calcium, strontium and barium.

In certain embodiments, the treatment of an aluminous material with HCI is a method selected from
- digestion or leaching of calcium-aluminate or calcium-aluminate-slag in HCI, or
- digestion of aluminum-dross in HCI, or
- digestion of aluminum scrap in HCI, or
- etching off Al from Si-crystals obtained by crystallization from an Al-Si-melt by HCI, or
- leaching of an material mix containing Al(OH)₃ with HCI.

In certain embodiments, the crude aluminum solution is provided by
- digestion or leaching of calcium-aluminate or calcium-aluminate-slag in HCI, or
- digestion of aluminum-dross in HCI, or
- digestion of aluminum scrap in HCI, or
- etching off Al from Si-crystals obtained by crystallization from an Al-Si-melt by HCI, or
- dissolution of salts containing one or more Al-chlorides, or
- leaching of an material mix containing Al(OH)₃ with HCI.

In certain embodiments, the crude aluminum solution is provided by
- digestion or leaching of calcium-aluminate or calcium-aluminate-slag in HCI, or
- digestion of aluminum-dross in HCI, or
- digestion of aluminum scrap in HCI, or
- etching off Al from Si-crystals obtained by crystallization from an Al-Si-melt by HCI, or
- leaching of an material mix containing Al(OH)₃ with HCI.

Before mixing the crude aluminum solution with the separation solution in the precipitation step, typically the mass fractions of the alkaline earth metals calcium, barium and strontium as well as the mass fractions of other impurities such as Mg are experimentally determined if not known empirically. Particularly in industrial scale, methods of obtaining a crude aluminum solution may be standardized in such a way that the variation in material composition of different batches is negligible and thus there is no need to experimentally determine the mass fractions of said alkaline earth metals and of other impurities for each batch. If the mass fraction of at least one of the alkaline earth metals exceeds 600 ppm wt and the mass fraction of other impurities is below 1000 ppm wt for each impurity, the crude aluminum solution may directly be used in the process described above, i.e. mixed with a separation solution.

However, a further treatment step using an ion exchanger may be performed before the precipitation step if the aluminum solution, e.g. a solution obtained by the treatment of an aluminous material with HCI or by the dissolution of salts that comprise aluminum chlorides, is characterized by a mass fraction of at least one of the alkaline earth metals exceeding 600 ppm wt and a mass fraction of other impurities exceeding 1000 ppm wt, particularly exceeding 600 ppm wt. Such aluminum solution is referred to as "pre-crude aluminum solution". The pre-crude aluminum solution is treated by ion exchange methods to exchange the impurities with calcium, strontium, barium and/or aluminum. Ion exchange is performed until the mass fraction of each impurity is less than 1000 ppm wt.

In certain embodiments, the crude aluminum solution is provided by treating a pre-crude aluminum solution comprising an impurity by exchanging said impurity with an ion of calcium or strontium or barium and/or aluminum.

Methods of exchanging ions are known to a person of skill in the art. For example, an ion exchanger may be used for exchanging said impurity with an ion of calcium or strontium or barium and/or aluminum.

In certain embodiments, the crude aluminum solution is provided by treating a pre-crude aluminum solution comprising one or more impurities by performing an ion exchange, wherein the mass fraction of said impurities exceeds 1000 ppm wt each, particularly 600 ppm wt each, and exchanging said impurity with calcium or strontium or barium and/or aluminum.

In certain embodiments, treating the pre-crude aluminum solution by performing an ion exchange is performed until the mass fraction of each impurity is less than 1000 ppm wt.

Ion exchange, e.g. by using an ion exchanger, is performed in such a way that each mass fraction of said impurities decreases. For example, a pre-crude aluminum solution with an impurity having a mass fraction of 2000 ppm wt may be treated until 900 ppm wt are achieved, or a pre-crude aluminum solution with an impurity having a mass fraction of 800 ppm wt may be treated until 600 ppm wt are achieved.

If the pre-crude aluminum solution comprises at least one alkaline earth metal selected from calcium, strontium and barium having a mass fraction of more than 600 ppm wt, and if the pre-crude aluminum solution comprises at least one impurity with a mass fraction between 600 ppm wt and 1000 ppm wt, the pre-crude aluminum solution may be treated by ion exchange, e.g. using an ion exchanger, or said solution may directly be used as crude aluminum solution.

In certain embodiments, the pre-crude aluminum solution is provided by
- digestion or leaching of calcium-aluminate or calcium-aluminate-slag comprising one or more impurities in HCI, or
- digestion of aluminum-dross in HCI, or
- digestion of aluminum scrap in HCI, or
- digestion of Al(OH)₃ containing sodium and/or one or more other impurities with HCI, or
- etching off Al from Si-Crystals obtained by crystallization from an Al-Si-melt by HCI, or
- dissolution of salts containing AI-, and one or more other chlorides, or
- leaching of an material mix containing Al(OH)₃ and one or more other impurities with HCl.

In certain embodiments, the pre-crude aluminum solution is provided by
- digestion or leaching of calcium-aluminate or calcium-aluminate-slag comprising one or more impurities in HCI, or
- digestion of aluminum-dross in HCI, or
- digestion of aluminum scrap in HCI, or
- digestion of Al(OH)₃ containing sodium and/or one or more other impurities with HCI, or
- etching off Al from Si-Crystals obtained by crystallization from an Al-Si-melt by HCI, or
- leaching of an material mix containing Al(OH)₃ and one or more impurities with HCI.

In certain embodiments, the impurity in the pre-crude or crude aluminum solution, particularly in the crude aluminum solution, is an ion of a metal or ion of a non-metal selected from S, Na, Mg, Si, P, B, K, Li, Cr, Ti, V, Co, Mn, Fe, Ni, Cu, Zn, Sc, Be, Ga, Ge, As, Se, Br, Y, Zr, Mo, W, Pt, Au, Pb.

In certain embodiments, the impurity in the pre-crude or crude aluminum solution, particularly in the crude aluminum solution, is an ion of a metal or ion of a non-metal selected from S, Na, Mg, Si, P, B, K, Li, Cr, Ti, V, Co, Mn, Fe, Ni, Cu, Zn, W, Pt, Au, Pb.

In certain embodiments, the impurity in the pre-crude or crude aluminum solution, particularly in the crude aluminum solution, is an ion of a metal or ion of a non-metal selected from S, Na, Mg, Si, P, B, K, Li, Cr, Ti, V, Co, Mn, Fe, Ni, Cu, Zn.

In certain embodiments, the impurity in the pre-crude or crude aluminum solution, particularly in the crude aluminum solution, is an ion of a metal or ion of a non-metal selected from Fe, K, Na, Mg, Cu, S, Si and Zn.

Apart from the impurities described above, the pre-crude aluminum solution may comprise ions of one or more alkaline earth metals selected from Ca, Ba and Sr. Similarly, the starting materials from which the pre-crude solution is obtained may comprise one or more ions of an alkaline earth metal selected from Ca, Ba and Sr.

In certain embodiments, the calcium-aluminate or calcium-aluminate-slag, the aluminum-dross, the aluminum scrap, Al(OH)₃ containing sodium and/or one or more other impurities, the crystals obtained by crystallization from Al-Si-melts, the salts containing Al- and one or more other chlorides and the material mixes containing Al(OH)₃ and one or more impurities, that are used to obtain the pre-crude aluminum solution, may optionally comprise one or more ions of an alkaline earth metal selected from Ca, Ba and Sr.

In certain embodiments, the alkaline earth metal is calcium.

The crude aluminum solution may contain residual, unreacted HCI from the preparation process described above, e.g. if HCI was added in excess during the treatment of an aluminous material with HCI. The HCI content should be kept minimal to avoid an increase of the solubility of alkaline earth metal sulphates such as CaSO₄. Furthermore, co-precipitation of aluminum chloride-hexahydrate can be avoided in the precipitation step if the HCI content is minimal.

In certain embodiments, the crude aluminum solution comprises an HCI content of 0 to 5 %wt of unreacted HCI in relation to the total mass of the crude aluminum solution.

The separation solution comprises aluminum sulphate which has the effect to precipitate alkaline earth metals upon mixing with the crude aluminum solution. Similar to the HCI content in the crude aluminum solution, also here the content of acids should be minimal to avoid the co-precipitation of aluminum chloride-hexahydrate and dissolution of alkaline earth metal sulphates in the precipitation step. As described above, the use of Al₂(SO₄)₃ instead of H₂SO₄ in the separation solution prevents the formation of free HCI.

In certain embodiments, the separation solution comprises aluminum sulphates without the addition of acids.

In certain embodiments, the separation solution consists of a (pure) aluminum sulphate solution.

For preparing the separation solution, educts of high purity are used to avoid the addition of further impurities. Particularly, technical-grade aluminum sulphate is used for preparing the aluminum sulphate solution.

In some cases, the free HCI might be adjusted to a desired level by a combination of adding pure sulfuric acid and Al₂(SO₄)₃-solution. This allows control on free HCI and residual Ca in some range.

In certain embodiments, the separation solution comprises additionally H₂SO₄.

To obtain a high-purity aluminum solution, as much alkaline earth metals should be precipitated as possible. Therefore, the amount of sulphate ions in the separation solution should be adjusted in such a way that it matches or exceeds the sum of alkaline earth metal ions in the crude aluminum solution. The amount of alkaline earth metal ions is determined by standard methods such as ICP-OES or ICP-MS, particularly ICP-OES.

In certain embodiments, the separation solution comprises a content of aluminum sulphate or aluminum sulphate and H₂SO₄ which stoichiometrically fits to or exceeds the amount of alkaline earth metal ions in the crude aluminum solution, wherein the number of SO₄-ions delivered by the separation solution is in exact balance with the sum of alkaline earth metal ions to form an alkaline earth metal sulphate or the number of SO₄-ions delivered by the separation solution exceeds the sum of alkaline earth metal ions of the crude aluminum solution by > 0 % to 30 %.

In certain embodiments, the separation solution comprises a content of aluminum sulphate or aluminum sulphate and H₂SO₄ which stoichiometrically fits to the amount of alkaline earth metal ions in the crude aluminum solution, wherein the number of SO₄-ions delivered by the separation solution is in exact balance with the sum of alkaline earth metal ions to form an alkaline earth metal sulphate.

In certain embodiments, the separation solution comprises a content of aluminum sulphate or aluminum sulphate and H₂SO₄ which stoichiometrically exceeds the amount of alkaline earth metal ions in the crude aluminum solution, wherein the number of SO₄-ions delivered by the separation solution exceeds the sum of alkaline earth metal ions of the crude aluminum solution by > 0 % to 30 %.

In certain embodiments, the separation solution is provided by
- digestion or leaching of calcium-aluminate or calcium-aluminate-slag in H₂SO₄, or
- digestion of aluminum-dross in H₂SO₄, or
- digestion of aluminum scrap in H₂SO₄, or
- dissolution of Al₂(SO₄)₃.

The addition of further impurities is avoided by using H₂SO₄ when preparing the separation solution.

In certain embodiments, the precipitation step is performed at ambient temperature, particularly at a temperature ranging from 15 °C to 35 °C, more particularly 20 °C to 25 °C.

Upon precipitation of alkaline earth metal sulphates, a purified aluminum solution is separated from the precipitated sulphates by standard methods such as filtering.

In certain embodiments, the separation step is performed by using a filtration technique.

In certain embodiments, the separation step is performed by using vacuum filtration.

The purified aluminum solution is further treated to obtain high-purity alumina. In a first step, HCI gas is injected into the purified aluminum solution (starting solution) until the main part of aluminum is crystallized as AlCl₃*6H₂O. The AlCl₃*6H₂O is purer than the starting solution. Subsequently, the formed AlCl₃*6H₂O crystals are separated from the remaining liquid and dissolved in pure water to obtain a saturated solution. In the saturated solution, the amount of remaining impurities is determined. If the desired purity is not reached, the steps described above are repeated, i.e. HCI gas is injected into the saturated solution followed by separating again AlCl₃*6H₂O crystals and dissolving them in water. These steps may further be repeated until the desired purity (e.g. 99,99 %) of the formed AlCl₃*6H₂O is reached. Once the desired purity is reached, the pure AlCl₃*6H₂O can finally be converted into alumina by thermal decomposition.

In certain embodiments, the converting step comprises
a) injection of HCl-gas to crystallize aluminum as AlCl₃*6H₂O,
b) separating the formed AlCl₃*6H₂O from the remaining liquid,
c) dissolving the formed AlCl₃*6H₂O in water to obtain a saturated solution and optionally repeating a) and b) until the desired purity of the formed AlCl₃*6H₂O is reached,
d) optionally, converting the formed AlCl₃*6H₂O into alumina by thermal decomposition.

The HCl-gas may be injected via a carrier gas stream of N₂.

Step (b) may be performed by standard methods, e.g. by using a filter, a filter press or a filter in combination with vacuum.

The high-purity aluminum chloride hexahydrate may further be treated by applying one or more different temperatures to obtain alumina.

In certain embodiments, thermal decomposition is performed at a temperature between 200°C and 1500 °C, particularly at a temperature between 500 °C and 1500 °C.

At temperatures between 200 °C and 600 °C, Al₂O₃ with some residual water is formed. Furthermore, residual HCI is released. For instance, thermal decomposition is performed at 500 °C for 30 to 60 min.

In certain embodiments, thermal decomposition is performed at 200 to 600 °C, particularly at 400 °C to 600 °C, more particularly at 500 °C.

The thermal decomposition may be followed by a heating step to obtain, gamma- or alpha-Al₂O₃ and to release residual water. In principle, it would be possible to directly apply high temperatures on the high-purity aluminum chloride hexahydrate obtained in step (c). However, residual HCI would decrease the service life of high-temperature furnaces by corrosion. Thus, in industrial scale, the thermal decomposition is performed in one furnace or reactor which is designed to handle HCl-containing off gasses and the heating step is performed in another high-temperature furnace.

Alumina in its alpha phase may be obtained at temperatures between 1000 °C and 1500 °C.

In certain embodiments, the thermal decomposition step is followed by a heating step at 1000 to 1500 °C.

In certain embodiments, the thermal decomposition step is followed by a heating step at 1000 to 1100 °C.

Alumina in its gamma phase may be obtained at temperatures between 500 °C and 900 °C.

In certain embodiments, the thermal decomposition step is followed by a heating step at 500 to 900 °C.

In certain embodiments, the thermal decomposition step is followed by a heating step between 600 °C and 700 °C.

A second aspect of the invention relates to a process for preparing high-purity alumina or AlCl₃*6H₂O, wherein an aluminum solution is treated by the following steps:
a) injection of HCl-gas to crystallize aluminum as AlCl₃*6H₂O,
b) separating the formed AlCl₃*6H₂O from the remaining liquid,
c) dissolving the formed AlCl₃*6H₂O in water to obtain a saturated solution and optionally repeating a) and b) until the desired purity of the formed AlCl₃*6H₂O is reached,
d) optionally, converting the formed AlCl₃*6H₂O into alumina by thermal decomposition
wherein the aluminum solution comprises one or more impurities having a content of less than 1000 ppm wt each.

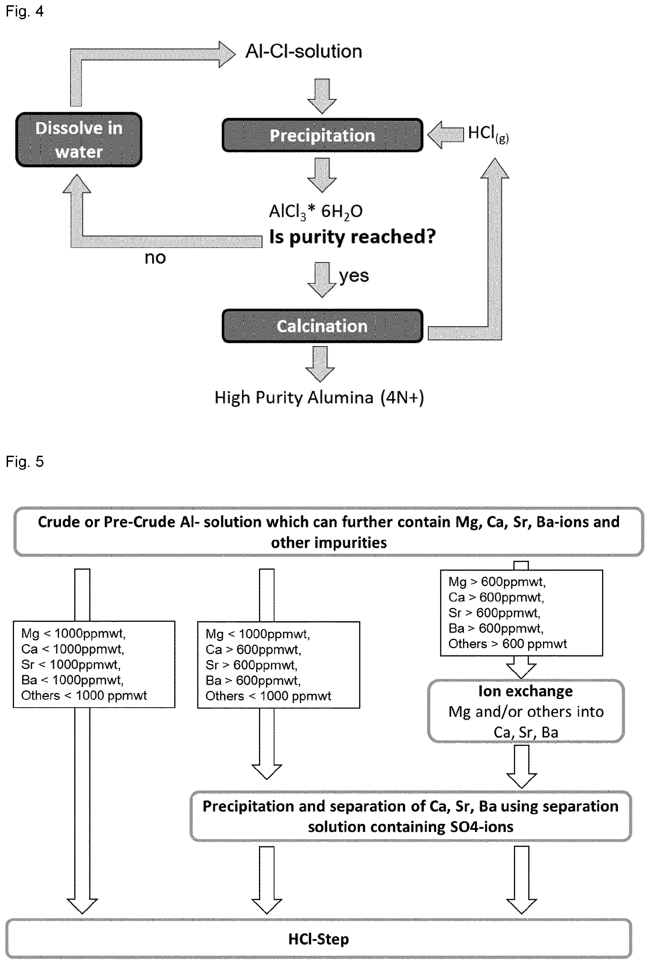

An alternative approach of obtaining high-purity alumina or high-purity AlCl₃*6H₂O is the direct treatment of an aluminum solution by the steps described above (see Fig. 5 left panel). In contrast to the process according to the first aspect of the invention (see Fig. 5 middle and right panel), precipitation of alkaline earth metal sulphates using a separation solution is not required if the aluminum solution comprises one or more impurities having a content of less than 1000 ppm wt each. Non-limiting examples for impurities are ions of Fe, K, Na, Ca, Ba, Sr, Mg, Cu, S, Si and Zn.

In certain embodiments, the impurity is an ion of a metal or ion of a non-metal selected from S, Na, Mg, Si, P, B, K, Li, Cr, Ti, V, Co, Mn, Fe, Ni, Cu, Zn, Sc, Be, Ga, Ge, As, Se, Br, Y, Zr, Mo, W, Pt, Au, Pb.

In certain embodiments, the impurity is an ion of a metal or ion of a non-metal selected from S, Na, Mg, Si, P, B, K, Li, Cr, Ti, V, Co, Mn, Fe, Ni, Cu, Zn, W, Pt, Au, Pb.

In certain embodiments, the impurity is an ion of a metal or ion of a non-metal selected from S, Na, Mg, Si, P, B, K, Li, Cr, Ti, V, Co, Mn, Fe, Ni, Cu, Zn.

In certain embodiments, the impurity is an ion of a metal or ion of a non-metal selected from Fe, K, Na, Ca, Ba, Sr, Mg, Cu, S, Si and Zn.

Reference is made to the embodiments of the first aspect of the invention, particularly the embodiments of the first aspect of the invention regarding the converting step including the decomposition and heating step.

A third aspect of the invention relates to a process for separating alkaline earth metal from aluminous material, said process comprising:
- providing of a crude aluminum solution comprising ions of aluminum and ions of at least one alkaline earth metal selected from calcium, strontium or barium,
- providing of a separation solution comprising aluminum sulphate;
- mixing said crude aluminum solution and said separation solution in a precipitation step,
- separating of alkaline earth metal sulphates in a separating step yielding a purified aluminum solution.

In certain embodiments, the process for separating alkaline earth metal from aluminous material comprises the steps as described in the first aspect of the invention. Reference is made to the embodiments of the first aspect of the invention.

The invention is further illustrated by the following examples and figures, from which further embodiments and advantages can be drawn. These examples are meant to illustrate the invention but not to limit its scope.

### Description of the Figures

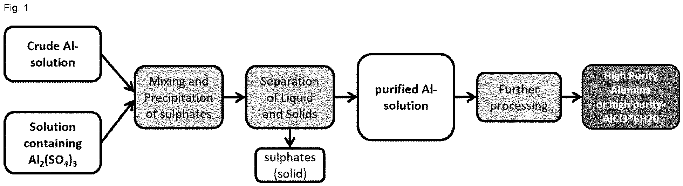

- Fig. 1: shows the process flow according to the invention.
- Fig. 2: shows the solubility of AlCl₃ depending on the HCl-concentration.
- Fig. 3: shows the Ca- and S-content of purified Al-solutions with increasing addition of Al₂(SO₄)₃. The amount of added SO₄-ions was in exact stochiometric balance with the measured Ca for sample No.3 (+/-0%) or had the following variation: -15% (sample No. 1), -5% (sample No. 2), +5% (sample No. 4), +10% (sample No. 5), +15% (sample No. 6) and +25% (sample No. 7) of the stochiometric addition.
- Fig. 4: shows further processing: process of purification by AlCl₃*6H₂O crystallization.
- Fig. 5: shows a decision tree for the processes described herein. The left panel relates to the process according to the second aspect of the invention while the middle and right panel relates to the processes described in the first aspect of the invention. The HCI-step is illustrated in detail in Fig. 4.

### Examples

### Example 1

120 g of a Calcium aluminate slag have been ground to a fine powder and then stirred into 403 ml concentrated hydrochloric acid in a beaker. Because of the exothermic reaction the beaker was cooled in water and the slag addition was made in small portions over a time of 2 hours. After the reaction slowed down the beaker with the suspension was kept at 80 °C and was stirred for another two hours.

Afterwards the suspension was filtered with the help of a vacuum filtering flask and a filter funnel resulting in a separation of residual solids. The filtration gave 500 g pregnant leaching solution (PLS) mainly containing calcium chloride and aluminum chloride and some other impurities.

The obtained liquid was analyzed by means of ICP-OES which confirmed a Ca- and Al-content of 4,6-4,9 %wt each. Other impurities like Fe, K, Na, Mg, Cu, S, Si and Zn have been detected at levels below 600 ppmwt in sum. This solution represents a crude aluminum solution and according to calculations it contains a residual of unreacted HCl of 3 %wt.

### Example 2

395 g crude aluminum solution of the kind described in example 1 was mixed with 139 g water and 42,5 g concentrated H₂SO₄ (96 %). This resulted in a massive precipitation of CaSO₄ giving a thick, white suspension. This suspension was filtered with the help of a vacuum filtering flask and a filter funnel resulting in a separation of liquid and solids.

The obtained liquid was analyzed by means of ICP-OES which confirmed a Ca- content of ∼5000 pmwt and Al- content of ∼4 %wt. Other impurities like Fe, K, Na, Mg, Cu, S, Si and Zn have been detected at levels around 1000 ppmwt in sum. This solution represents a purified aluminum solution and according to calculations it contains a residual of 6,3 %wt HCl formed by the reaction of H₂SO₄ with CaCl₂.

### Example 3

1042 g crude aluminum solution of the kind described in example 1 was mixed with 619 g Al₂(SO₄)₃-solution which had an Al₂(SO₄)₃- content of approximately 26 %wt. This resulted in a massive precipitation of CaSO₄ giving a thick, white suspension. This suspension was filtered with the help of a vacuum filtering flask and a filter funnel resulting in a separation of liquid and solids.

The obtained liquid was analyzed by means of ICP-OES which confirmed a Ca-content of 316 pmwt and Al- content of 4,6 %wt. Other impurities like Fe, K, Na, Mg, Cu, Si and Zn have been detected at levels below 700 ppmwt in sum. Since the Al₂(SO₄)₃ was added with a stochiometric excess of 25 % the sulfur was measured at 5000 ppmwt. This solution represents a purified aluminum solution and according to calculations it contains a residual of 2,4 %wt HCl due to dilution.

### Example 4

In a series of trials, it was tested how different amounts of added Al₂(SO₄)₃-solution affect the final concentrations of Calcium and Sulfur in the purified aluminum solution.

Therefore, the Ca- content of a crude Al-Solution was measured by ICP-OES and an exact addition Al₂(SO₄)₃ was calculated according the reaction:

3 CaCl₂ + Al₂(SO₄)₃ → 2 AlCl₃ + 3 CaSO₄

Then different additions of Al₂(SO₄)₃ were made based on the stochiometric value and variations of it ranging between -15 % and +25 %.

The resulting calcium and sulfur concentrations of the seven purified Al-solutions are plotted in Figure 3. With increasing addition of Al₂(SO₄)₃ the concentration of Ca decreases while the concentration of S increases.

### Example 5

300 g purified crude Al-solution was filled into a reactor and 155 g HCl-gas was injected into this liquid via a carrier gas stream of N₂ at 1,6 l/min over 5 hours.

After this time 146 g ACH crystallized and could be separated from the remaining liquid. The composition of the ACH was measured by ICP-OES and confirmed a purity of 99 %. The obtained ACH was diluted in deionized water to form a saturated aluminum chloride solution which was used as a starting solution for a second HCl-gas injection and ACH crystallization. The ACH out of the second purification cycle had a purity of 99,9 %.

### Example 6

ACH was recrystallized as described in example 5 until the final purity reached 99,99 % (4N). This material then was dried carefully on a hotplate at 125 °C and then put into a reactor for thermal decomposition. This was carried out at 500 °C for 30 to 60 minutes and an input of 100 g dry ACH results in 22 to 24 g amorphous Al₂O₃ with some residual water. According weight the decomposition was 96 to 98 %. According to the reaction:

2 [AlCl₃ *6 H₂O] → Al₂O₃+ 9 H₂O + 6 HCl

HCl-gas and water are evaporated and this off gas can be dissolved in pure water to form hydrochloric acid. The formed amorphous Al₂O₃ was then fired at temperatures of 1000-1100 °C to form alpha-Al₂O₃ and release residual water.

## Claims

1. A process for preparing AlCl₃*6H₂O or alumina, said process comprising:
- providing of a crude aluminum solution comprising ions of aluminum and ions of at least one alkaline earth metal selected from calcium, strontium, or barium, particularly calcium,
- providing of a separation solution comprising aluminum sulphate;
- mixing said crude aluminum solution and said separation solution in a precipitation step,
- separating of alkaline earth metal sulphates in a separating step yielding a purified aluminum solution,
- converting the aluminum ions of said purified aluminum solution into AlCl₃*6H₂O or alumina in a converting step.

2. The process according to any of the previous claims, wherein the content of at least one of alkaline earth metal selected from calcium, strontium or barium, particularly calcium, in that crude aluminum solution is more than 600 ppm wt.

3. The process according to any of the previous claims, wherein the crude aluminum solution comprises one or more impurities with a content of less than 1000 ppm wt each.

4. The process according to any of the previous claims, wherein the crude aluminum solution is provided by
- treatment of an aluminous material with HCI, in particular
∘ digestion or leaching of calcium-aluminate or calcium-aluminate-slag in HCl, or
∘ digestion of aluminum-dross in HCl, or
∘ digestion of aluminum scrap in HCl, or
∘ etching off Al from Si-crystals obtained by crystallization of an Al-Si-melt by HCl, or
∘ leaching of an material mix containing Al(OH)₃ with HCl, or
- dissolution of salts containing one or more Al-chlorides, or
- treating a pre-crude aluminum solution comprising an impurity by exchanging said impurity with an ion of calcium or strontium or barium and/or aluminum.

5. The process according to claim 4, wherein the pre-crude aluminum solution is provided by
- digestion or leaching of calcium-aluminate or calcium-aluminate-slag comprising one or more impurities in HCl, or
- digestion of aluminum-dross in HCl, or
- digestion of aluminum scrap in HCl, or
- digestion of Al(OH)₃ containing sodium and/or one or more other impurities with HCl, or
- etching off Al from Si-Crystals obtained by crystallization from an Al-Si-melt by HCl, or
- dissolution of salts containing Al- and one or more other chlorides, or
- leaching of an material mix containing Al(OH)₃ and one or more impurities with HCl.

6. The process according to any of the previous claims, wherein the impurity is an ion of a metal or ion of a non-metal selected from S, Na, Mg, Si, P, B, K, Li, Cr, Ti, V, Co, Mn, Fe, Ni, Cu, Zn, Sc, Be, Ga, Ge, As, Se, Br, Y, Zr, Mo, W, Pt, Au, Pb.

7. The process according to any of the previous claims, wherein the separation solution comprises aluminum sulphates without the addition of acids.

8. The process according to any of the previous claims, wherein the separation solution comprises additionally H₂SO₄.

9. The process according to any of the previous claims, wherein the separation solution comprises a content of aluminum sulphate or aluminum sulphate and H₂SO₄ which stoichiometrically fits to the amount of alkaline earth metal ions in the crude aluminum solution, wherein the number of SO₄-ions delivered by the separation solution is in exact balance with the sum of alkaline earth metal ions to form an alkaline earth metal sulphate.

10. The process according to any of claims 1 to 8, wherein the separation solution comprises a content of aluminum sulphate or aluminum sulphate and H₂SO₄ which stoichiometrically exceeds the amount of alkaline earth metal ions in the crude aluminum solution, wherein the number of SO₄-ions delivered by the separation solution exceeds the sum of alkaline earth metal ions of the crude aluminum solution by > 0 % to 30 %.

11. The process according to any of the previous claims, wherein the separation solution is provided by
- digestion or leaching of calcium-aluminate or calcium-aluminate-slag in H₂SO₄, or
- digestion of aluminum-dross in H₂SO₄, or
- digestion of aluminum scrap in H₂SO₄, or
- dissolution of Al₂(SO₄)₃.

12. The process according to any of the previous claims, wherein the converting step comprises
a) injection of HCl-gas to crystallize aluminum as AlCl₃*6H₂O,
b) separating the formed AlCl₃*6H₂O from the remaining liquid,
c) dissolving the formed AlCl₃*6H₂O in water to obtain a saturated solution and optionally repeating a) and b) until the desired purity of the formed AlCl₃*6H₂O is reached,
d) optionally, converting the formed AlCl₃*6H₂O into alumina by thermal decomposition.

13. A process for preparing high purity alumina or AlCl₃*6H₂O, wherein an aluminum solution is treated by the following steps:
a) injection of HCl-gas to crystallize aluminum as AlCl₃*6H₂O,
b) separating the formed AlCl₃*6H₂O from the remaining liquid,
c) dissolving the formed AlCl₃*6H₂O in water to obtain a saturated solution and optionally repeating a) and b) until the desired purity of the formed AlCl₃*6H₂O is reached,
d) optionally, converting the formed AlCl₃*6H₂O into alumina by thermal decomposition
wherein
the aluminum solution comprises one or more impurities having a content of less than 1000 ppm wt each.

14. A process for separating alkaline earth metal from aluminous material, said process comprising:
- providing of a crude aluminum solution comprising ions of aluminum and ions of at least one alkaline earth metal selected from calcium, strontium or barium,
- providing of a separation solution comprising aluminum sulphate;
- mixing said crude aluminum solution and said separation solution in a precipitation step,
- separating of alkaline earth metal sulphates in a separating step yielding a purified aluminum solution.

15. The process for separating alkaline earth metal from aluminous material, comprising the steps of the claims 2 to 12.
